(19)

Europäisches
Patentamt
European
Patent Office
Office européen
des brevets

(11) **EP 4 765 809 A1**

(12) **EUROPEAN PATENT APPLICATION**

(43) Date of publication:
**24.06.2026 Bulletin 2026/26**

(21) Application number: **24307152.9**

(22) Date of filing: **18.12.2024**

(51) International Patent Classification (IPC):
*H04N 19/13* (2014.01)    *H04N 19/18* (2014.01)
*H04N 19/70* (2014.01)

(52) Cooperative Patent Classification (CPC):
**H04N 19/13; H04N 19/18; H04N 19/70; H04N 19/91**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **LE LEANNEC, Fabrice
  35830 BETTON (FR)**
• **SALMON-LEGAGNEUR, Charles
  35000 RENNES (FR)**
• **GALPIN, Franck
  35235 THORIGNE-FOUILLARD (FR)**

(74) Representative: **Vossius & Partner
Patentanwälte Rechtsanwälte mbB
Siebertstraße 3
81675 München (DE)**

(54) **ENTROPY CODING OF RESIDUAL SYNTAX ELEMENTS**

(57)    A device for video decoding may determine a range of values for a coordinate associated with a non-zero coefficient of a transform block (TB). The coordinate may indicate a sample location associated with the non-zero coefficient in the TB. The device may determine a context-adaptive binary arithmetic coding (CABAC) context for entropy decoding a coordinate indication indicating whether a coordinate suffix associated with the range of values may be received. The device may determine the coordinate based on the coordinate indication. The device may decode the TB based on the coordinate associated with the non-zero coefficient. The device may entropy decode the coordinate indication associated with the coordinate based on the CABAC context. The device may determine that the coordinate suffix is not to be received and/or that the coordinate is to be determined based on a subset of the range values and/or the size of the TB.

| Position | prefix | suffix | Suffix Range |
|---|---|---|---|
| | Truncated unary (regular mode) | Fixed length (bypass mode) | |
| 0 | 0 | – | – |
| 1 | 10 | – | – |
| 2 | 110 | – | – |
| 3 | 1110 | – | – |
| 4–5 | 11110 | X | 0 to 1 |
| 6–7 | 111110 | X | 0 to 1 |
| 8–11 | 1111110 | XX | 0 to 3 |
| 12–15 | 11111110 | XX | 0 to 3 |
| 16–23 | 111111110 | XXX | 0 to 7 |
| 24–31 | 111111111(0) | XXX | 0 to 7 |

| | prefix | Secondary prefix | Suffix | Suffix range |
|---|---|---|---|---|
| 32 – 47 | 1111111111(0) | X | XXXX | 0 to 15 |
| 48 – 63 | 11111111111(0) | X | XXXX | 0 to 15 |
| 64 – 95 | 111111111111(0) | X | XXXXX | 0 to 31 |
| 96 – 127 | 1111111111111(0) | X | XXXXX | 0 to 31 |
| 128 - 191 | 11111111111111(0) | X | XXXXXX | 0 to 63 |
| 192 – 255 | 111111111111111 | X | XXXXXX | 0 to 63 |

**FIG. 14**

EP 4 765 809 A1

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are configured for entropy coding of residual block syntax elements. A device for video decoding may include a processor. The device may be configured to determine a range of values for a coordinate associated with a non-zero coefficient of a transform block (TB). The coordinate may indicate a sample location associated with the non-zero coefficient in the TB. The device may determine, based on a size of the TB, a context-adaptive binary arithmetic coding (CABAC) context for entropy decoding a coordinate indication indicating whether a coordinate suffix associated with the range of values is to be received. The device may determine the coordinate based on the coordinate indication. The device may decode the TB based on the coordinate associated with the non-zero coefficient.

The device may include one or more features. For example, the device may entropy decode the coordinate indication associated with the coordinate based on the CABAC context. The device may determine, based on the coordinate indication, that the coordinate suffix is not to be received and/or that the coordinate is to be determined based on a subset of the range values and/or the size of the TB. The device may determine that the coordinate is a maximum value that is allowed according to the size of the TB. In some examples, the device may entropy decode the coordinate indication associated with the coordinate based on the CABAC context. The device may determine, based on the coordinate indication, that the coordinate suffix is to be received. The device may receive the coordinate suffix, wherein the coordinate suffix indicates a value within the range of values or an offset associated with the range of values. The device may determine the coordinate based on the range of values and/or the coordinate suffix. The device may entropy decode the coordinate indication associated with the coordinate based on the CABAC context. The device may determine, based on the coordinate indication, that the coordinate suffix may be received. The coordinate suffix may be associated with one or more bits. The device may obtain a CABAC context associated with a bit (e.g., a suffix bin) of the one or more bits associated with the coordinate suffix. The device may obtain the coordinate suffix by using the CABAC context to entropy decode the bit. The device may determine the coordinate based on the range of values and/or the coordinate suffix. The CABAC context associated with the bit may be determined based on one or more of the size of the TB or the component type associated with the TB.

A device for video encoding may include a processor. The device may be configured to determine a range of values for a coordinate associated with a non-zero coefficient of a TB. The coordinate may indicate a sample location associated with the non-zero coefficient in the TB. The device may encode the TB based on the coordinate associated with the non-zero coefficient. The device may obtain a coordinate indication indicating whether a coordinate suffix associated with the range of values is to be sent. The device may determine, based on a size of the TB, a CABAC context for entropy encoding the coordinate indication. The device may entropy encode the coordinate indication based on the CABAC context.

The device may include one or more features. For example, a value of the coordinate indication may indicate that the coordinate suffix is not to be sent and/or that the coordinate is to be determined based on a subset of the range values and/or the size of the TB. The coordinate indication may indicate that the coordinate is a maximum value that is allowed according to the size of the TB. A value of the coordinate indication may indicate that the coordinate suffix is to be sent. The device may send the coordinate suffix. The coordinate suffix may indicate a value within the range of values, or an offset associated with the range of values. A value of the coordinate indication may indicate that the coordinate suffix is to be sent. The device may determine, based on the coordinate indication, that the coordinate suffix may be sent. The coordinate suffix may be associated with one or more bits. The device may obtain a CABAC context associated with a bit of the one or more bits associated with the coordinate suffix. The device may entropy encode the bit associated with the coordinate suffix using the CABAC context. The device may send the coordinate suffix. The CABAC context associated with the bit may be determined based on one or more of the size of the TB and/or the component type associated with the TB.

The range of values may be determined based on a first coordinate prefix (e.g., a primary prefix), the coordinate indication may be a second coordinate prefix (e.g., a secondary prefix), and/or the non-zero coefficient may be a last significant coefficient of the TB. The device may, on a condition that the TB is a first size, determine a first CABAC context (e.g., a first CABAC context is determined), and/or, on a condition that the TB is a second size, determine a second CABAC context (e.g., a second CABAC context is determined). The first size and/or the second size may be different. The first CABAC context and/or the second CABAC context may be different. The CABAC context may be further determined (e.g., by the device) based on a component type associated with the TB. The device may, on a condition that the component type associated with the TB is a luma component, determine a first CABAC context (e.g., a first CABAC context is determined). The device may, on a condition that the component type associated with the TB is a chroma component, determine a second CABAC context (e.g., a second CABAC context is determined). The device may, on a condition that the coordinate is an X coordinate, determine the CABAC context based on a width of the TB (e.g., the CABAC context is determined based on a width of the TB). The device may, on a condition that the coordinate is a Y coordinate, determine the CABAC context based on a height of the TB (e.g., the CABAC context is determined based on a height of the TB). The device may, on a condition that the size of TB is greater than a threshold, determine a first CABAC context for entropy decoding the coordinate indication (e.g., a first CABAC context is determined for entropy decoding the coordinate indication). The device may, on a condition that the TB is lower than or equal to the threshold, determine a second CABAC context for entropy decoding the coordinate indication (e.g., a second CABAC context is determined for entropy decoding the coordinate indication). The first CABAC context and/or the second CABAC context may be different.

A video decoding method may include determining a range of values for a coordinate associated with a non-zero coefficient of a TB. The coordinate may indicate a sample location associated with the non-zero coefficient in the TB. The method may include determining, based on a size of the TB, a CABAC context for entropy decoding a coordinate indication indicating whether a coordinate suffix associated with the range of values may be received. The method may include determining the coordinate based on the coordinate indication. The method may include decoding the TB based on the coordinate associated with the non-zero coefficient. The method may include entropy decoding the coordinate indication associated with the coordinate based on the CABAC context. The method may include determining, based on the coordinate indication, that the coordinate suffix may not be received and/or that the coordinate may not be determined based on a subset of the range values and/or the size of the TB. The method may include entropy decoding the coordinate indication associated with the coordinate based on the CABAC context. The method may include determining, based on the coordinate indication, that the coordinate suffix is to be received. The method may include receiving the coordinate suffix. The coordinate suffix may indicate a value within the range of values or an offset associated with the range of values. The method may include determining the coordinate based on the range of values and the coordinate suffix.

A video encoding method may include determining a range of values for a coordinate associated with a non-zero coefficient of a TB. The coordinate may indicate a sample location associated with the non-zero coefficient in the TB. The method may include encoding the TB based on the coordinate associated with the non-zero coefficient. The method may include obtaining a coordinate indication indicating whether a coordinate suffix associated with the range of values may be sent. The method may include determining, based on a size of the TB, a CABAC context for entropy encoding the coordinate indication. The method may include entropy encoding the coordinate indication based on the CABAC context. A value of the coordinate indication may indicate that the coordinate suffix may not be sent and/or that the coordinate may be determined based on a subset of the range values and/or the size of the TB.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.

FIG. 2 shows an example video encoder according to one or more embodiments of the present disclosure.

FIG. 3 shows an example video decoder according to one or more embodiments of the present disclosure.

FIG. 4 illustrates an example context-adaptive binary arithmetic coding (CABAC) decoding process.

FIG. 5 illustrates an example CABAC coding process.

FIG. 6 illustrates example coefficient group (CG) sizes for WxH transform blocks (TBs).

FIG. 7 illustrates an example of a reverse diagonal scan, including an example coding order of CGs.

FIG. 8 illustrates an example binarization for coordinates of a last significant coefficient position.

FIG. 9 illustrates an example of CABAC context indices for prefix bins of last significant coefficient position coding.

FIG. 10 illustrates an example binarization of the last significant coefficient coordinate syntax elements.

FIG. 11 illustrates an example binarization of a prefix and/or a suffix of last significant position syntax elements.

FIG. 12 illustrates graphs depicting example distributions of a last significant position X values

FIG. 13 illustrates an example of a distribution of suffix values for a prefix value.

FIG. 14 illustrates an example binarization of LastSigPosX/Y syntax element.

FIG. 15 illustrates an example binarization of LastSigPosX/Y syntax element.

FIG. 16 illustrates an example CABAC-based dyadic signaling of a suffix value down to a pre-fixed reduced interval.

FIG. 17 illustrates an example of reducing a suffix range.

FIG. 18 illustrates an example of reducing a suffix range.

FIG. 19 illustrates an example for reducing the suffix range for a last significant position value.

## DETAILED DESCRIPTION

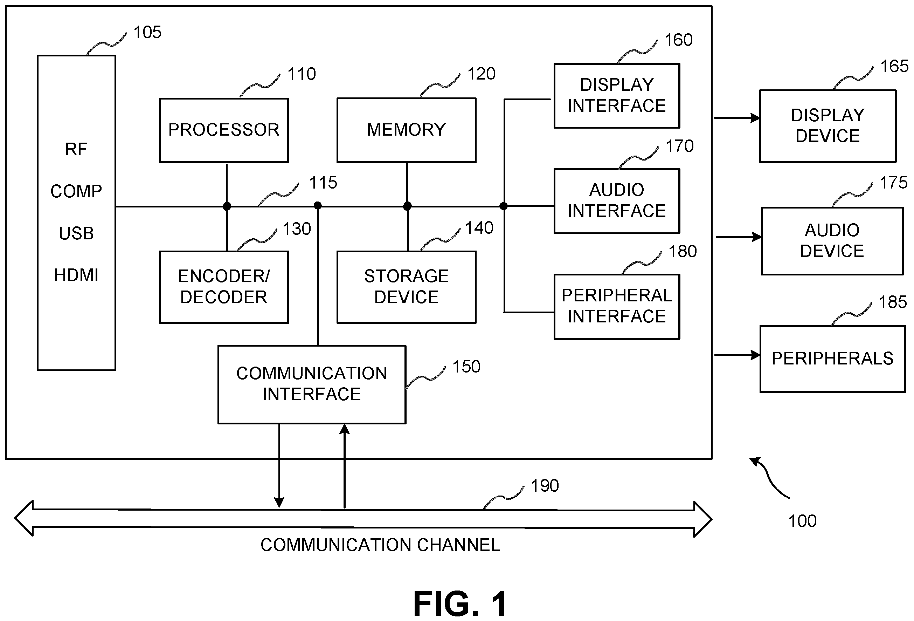

In describing the various embodiments of the present disclosure, certain terminology is used herein for convenience only and should not be considered as limiting such embodiments. In the drawings, the same reference numerals are employed for designating the same elements throughout the several figures and the present description.
Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.
One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.
The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.
The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.
The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.
Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

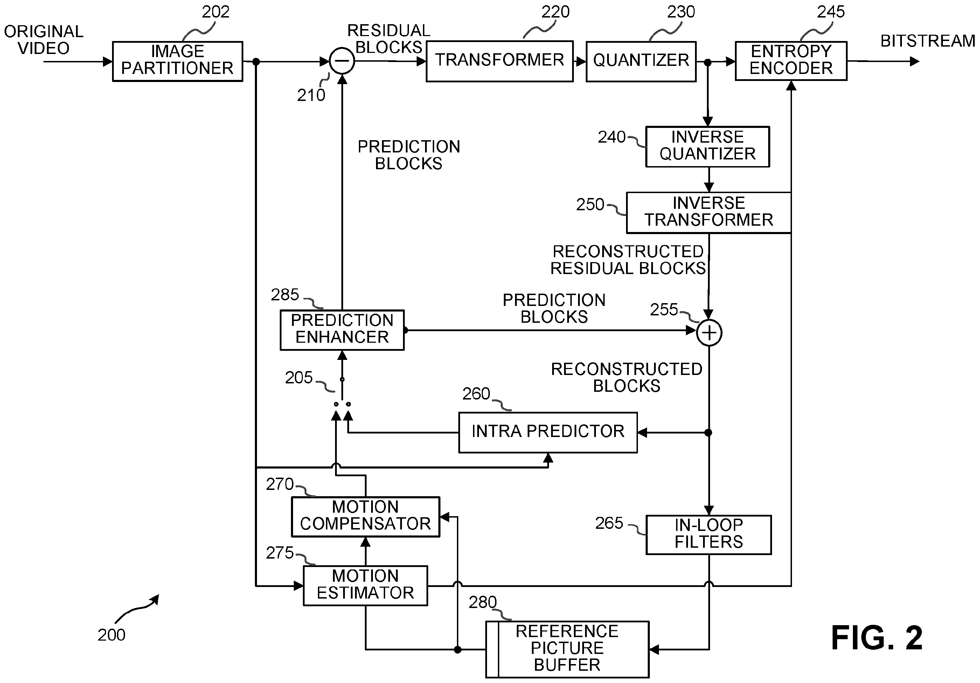

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

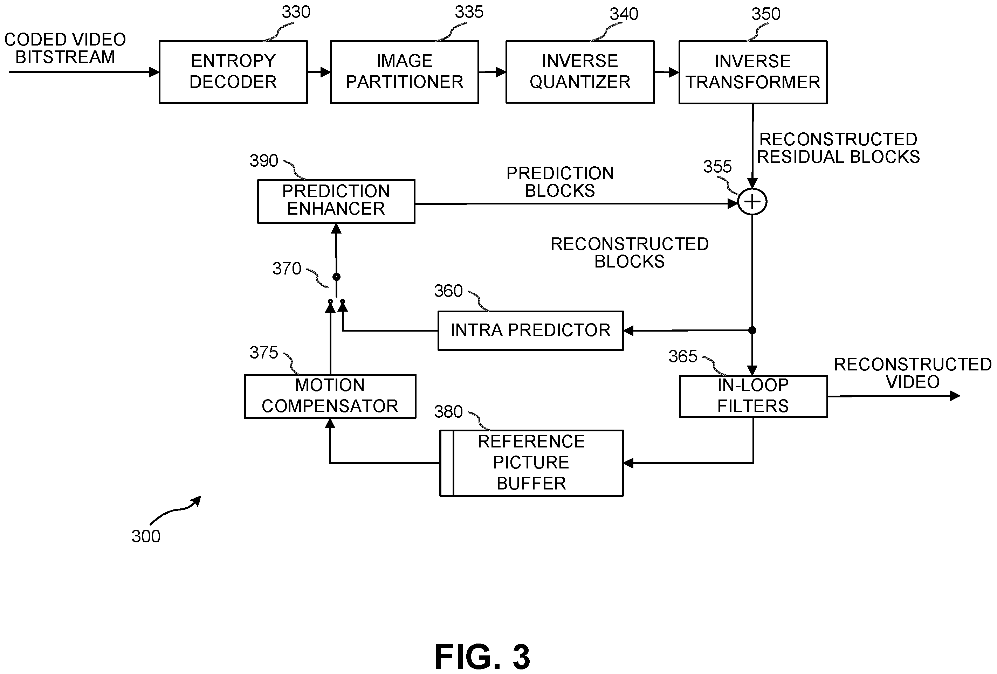

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, Cb, Cr).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block (TB)) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Features described herein may be associated with residual block entropy coding. A syntax element decoding operation including context-adaptive binary arithmetic coding (CABAC) may be described herein. An example internal CABAC decoding example may be described herein (e.g., a decoding and/or encoding example).

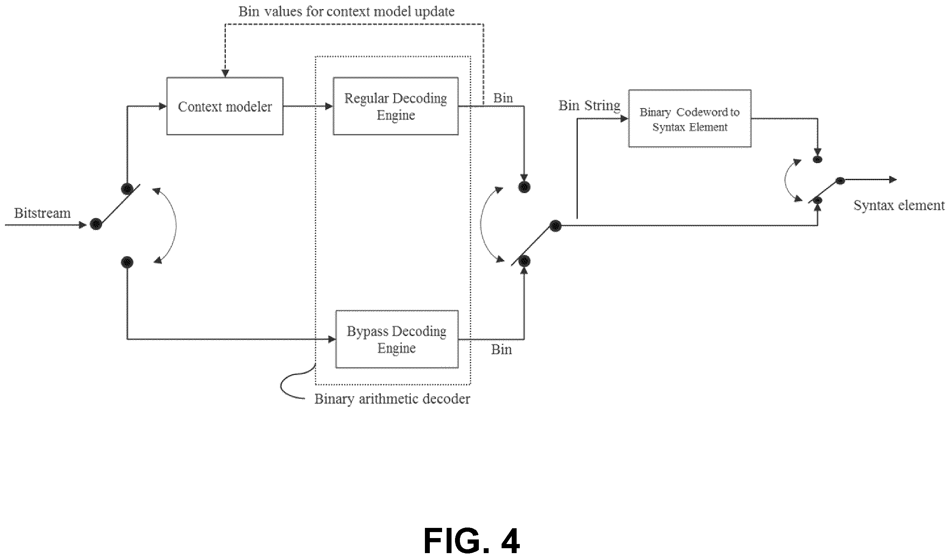

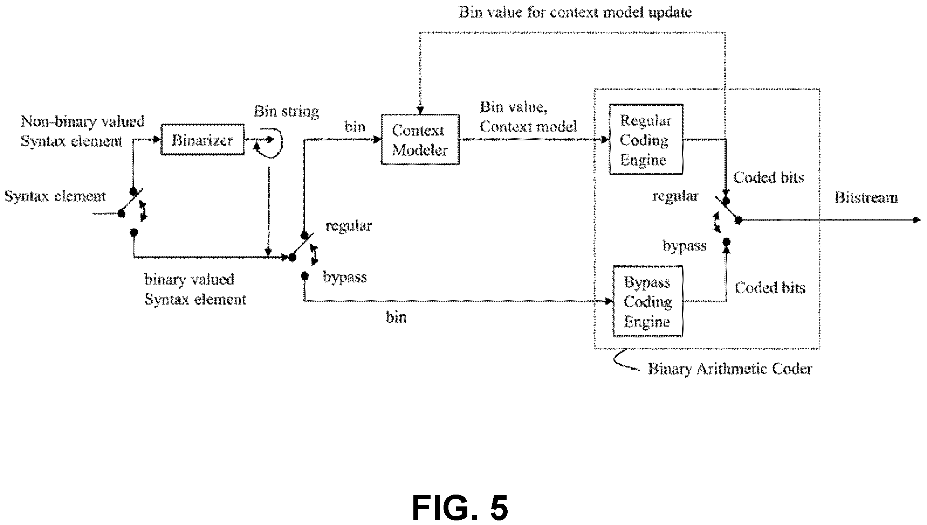

FIG. 4 illustrates a CABAC decoding example of a syntax element when provided an input coded bit-stream. The CABAC decoding example may be a reciprocal example of the syntax element coding operations of FIG. 5.

The input to the example of FIG. 4 may be included in a coded bitstream. At a point of the decoding process, the decoder may know which syntax element is to be decoded (e.g., next). The syntax element to be decoded (e.g., next) may be specified in bitstream syntax and/or the decoding process. It may be known how a syntax element to be decoded may be binarized (e.g., represented as a sequence of binary symbols called bins, equal to 1 or 0) and/or how a bin of the bin string has been encoded.

A (e.g., the first) operation of the CABAC decoding (e.g., left side of FIG. 4) may include decoding a series of bins. For a bin, if/whether the series of bins have been encoded according to the bypass mode or the regular mode may be determined. The bypass mode may include reading a bit in the bit-stream and assigning the so-obtained bit value to bin. The mode may be efficient and used for bins that include a uniform statistical distribution, e.g., an equal probability of being equal to 1 or 0.

If a bin is coded in bypass mode, the bin may (e.g., or may not) have been coded in CABAC. In CABAC, the decoding of a (e.g., considered) bin may be described herein. A context may be obtained for the decoding of a bin. The context may be provided by the context modeler module shown in FIG. 4. The goal of the context may be to obtain the conditional probability that a (e.g., the current) bin includes a value of 1, provided prior context or information $X$. The prior $X$ may be the value of a (e.g., an already) decoded syntax element and/or may be available on the encoder and decoder side in a synchronous way, at the time the bin is being decoded. The prior $X$ may include information, such as for example, the position of a residual coefficient inside the coding unit (e.g., if/when decoding bins are linked to residual coefficients (gtx0Flag, gtx1 Flag, ParFlag, and/or the like)).

The prior $X$ used for the decoding of a bin may be specified and/or may be chosen because it is statistically correlated with a (e.g., the current) bin to decode. The contextual information may be used because the contextual information reduces the rate cost of coding the bin. The conditional entropy of the bin provided $X$ may be low (e.g., lower) as the bin and $X$ are correlated. The following relationship may be associated with information theory:

$$H(bin|X) < H(bin)$$

The conditional entropy of *bin* knowing $X$ may be lower than the entropy of *bin* if *bin* and $X$ are statistically correlated. The contextual information $X$ may be used to obtain the probability of *bin* being 0 or 1. Given the conditional probabilities, the decoding engine of FIG. 4 may perform the arithmetic decoding of the binary value *bin.* The value of *bin* may be used to update the value of the conditional probabilities associated with a (e.g., the current) bin, knowing the current contextual information X. The context model updating operation may be depicted, for example, in FIG. 4. Updating the context model for a bin, as long as the bins are being decoded (or coded), may allow for progressively refining the context modeling for a binary element. The CABAC decoder may progressively learn the statistical behavior of a regular-encoded bin.

The context modeler and the context model updating operations may be similar (e.g., identical) operations on the encoder and/or on the decoder side. The arithmetic decoding of a bin or its bypass decoding, depending on how the bin was coded may lead to a series of decoded bins.

An (e.g., the second) operation of the CABAC decoding (e.g., shown on the right side of FIG. 4), may include converting the series of binary symbols into higher level syntax elements. A syntax element may be an indication, in which case, the syntax element may take the value of decoded bins. If the binarization of a syntax element corresponds to a set of (e.g., several) bins, conversion operations (e.g., binary codeword to syntax element) on FIG. 4, may take place.

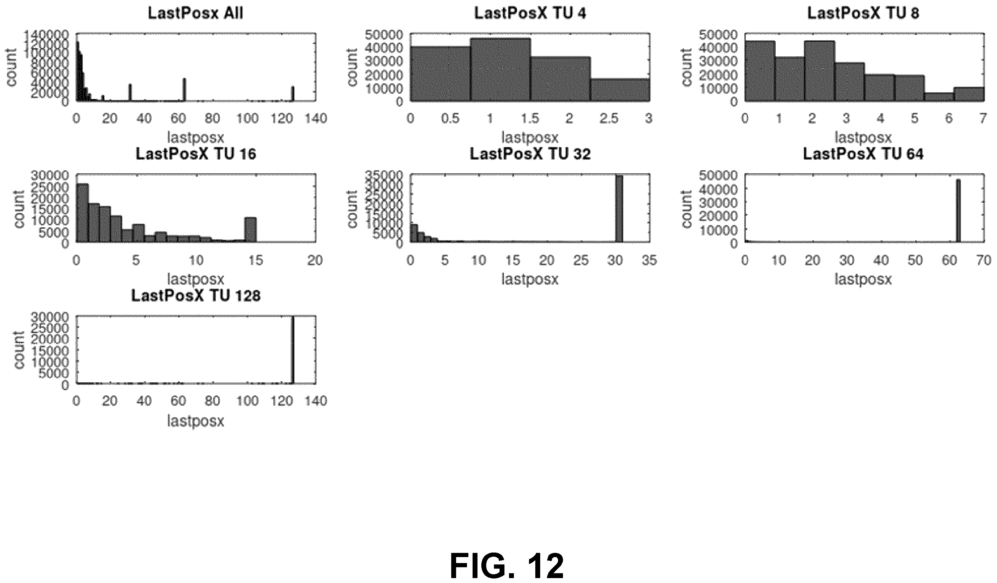

The operations may be the reciprocal of the binarization operation that was performed by the encoder. For example, FIG. 12 illustrates an example binarization of the syntax elements *last_sig_coeff_x_prefix, last_sig_coeff_y_prefix, last_sig_coeff_x_suffix,* and *last_sig_coeff_y_suffix.* The inverse conversion performed may include obtaining the value of a syntax element based on the syntax elements respective decoded binarized versions.

FIG. 5 illustrates an example CABAC coding operations. The example CABAC coding operations may include obtaining a syntax element, obtaining a binarized value of the syntax element, context-based arithmetic coding of (e.g., some of the) bins of the syntax element, and/or bypass coding of (e.g., some) bins of the syntax element.

Features described herein may be associated with transform coefficient coding/decoding.

The quantized residual coefficients, included in a video block (e.g., a TB), may be entropy coded and/or decoded.

The transform coefficient coding may include the following: a coded block indication may indicate if/whether a TB includes a nonzero level; for blocks with a CBF equal to 1, the x and y coordinate of the last nonzero level in forward scan order may be transmitted; a TB may be divided into sub-blocks of quantized coefficients called coding groups or coefficient groups (interchangeably referred to herein as "CG" or "CGs"), whose size may depend on the TB size.

Starting from the indicated last position, the levels (e.g., magnitude) may be transmitted in reverse scan order CGs (e.g., CG by CG). The bins for a CG may be coded in one or more passes, where the bypass-coded bins may be grouped together (e.g., to enable efficiency). The scanning order of transform coefficients may correspond to a zig-zag scanning order in reverse order. Features described herein may include coefficients group determination, scan order, and/or the coding of the (e.g., last significant) coefficient position.

CGs and/or scan orders may be described herein.

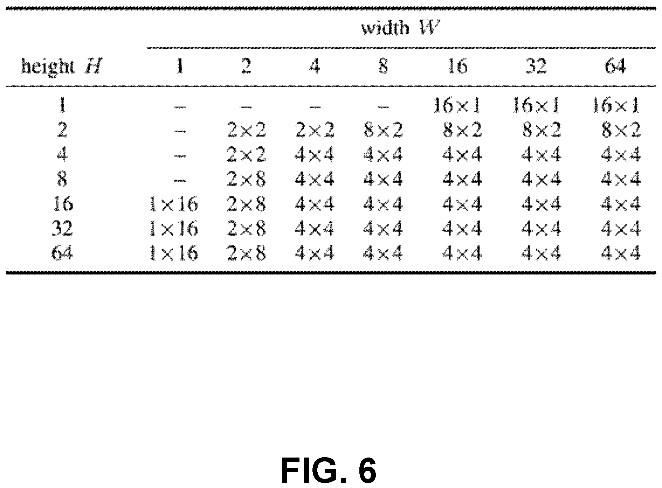

The transform coefficient levels {q} of a W×H TB may be arranged in a W×H matrix. For enabling harmonized processing across one or more block sizes and/or for increasing coding efficiency for TBs (e.g., in which the signal energy may be concentrated into transform coefficients that correspond to low horizontal or low vertical frequencies), TBs may be partitioned into CGs. The levels for a CG may be coded (e.g., in a unified manner) using one or more scan passes. Block sizes with widths and/or heights less than 4 may be supported. The shape of CGs may depend on the TB size as shown in FIG. 6.

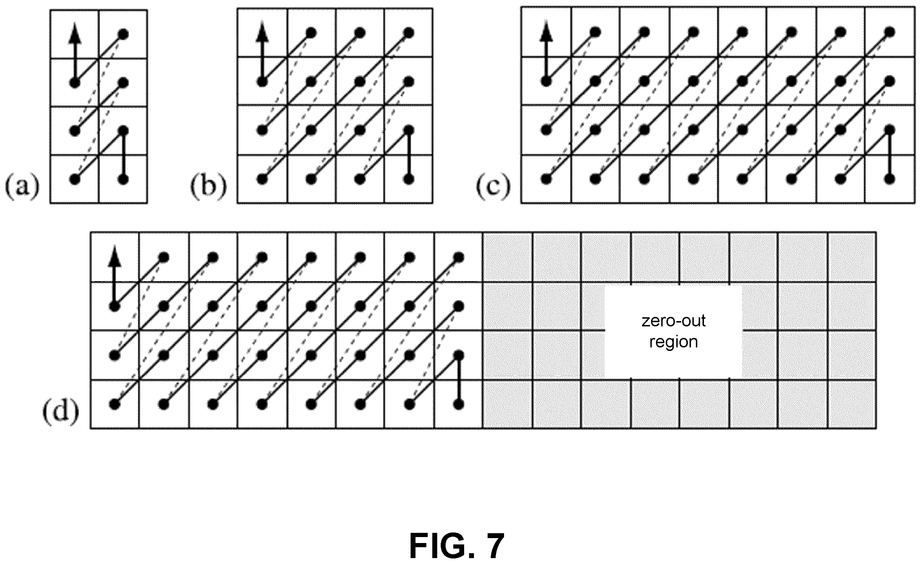

FIG. 6 illustrates example CG sizes for WxH TBs. For TBs with at least 16 coefficients, the CGs may include 16 levels. For smaller blocks, CGs of 2×2 levels may be used. The coding order of CGs may be provided by the reverse diagonal scan illustrated in FIG. 7.

FIG. 7 illustrates an example of a reverse diagonal scan, including a coding order of CGs in (a) 8×16 blocks, (b) 16×16 blocks (e.g., the coding order of levels in 4×4 CGs), (c) 32×16 blocks, and (d) 64×16 blocks.

Independent of the CG size, the CG diagonals may be processed from the bottom right to the top left of a TB (e.g., where a diagonal may be scanned in down left direction). The coding order of levels inside CGs may be specified by the same reverse diagonal scan.

For limiting the worst-case decoder complexity for large transform sizes, transform coefficients at high-frequency locations may be (e.g., forced to be) equal to zero. Nonzero quantization indexes may be present in a min(W,Wn)×min(H,Hn) region at the top-left of a TB, where Wn×Hn denotes the size of the non-zero-out area that may be inferred at the decoder side. CGs outside a min(W,Wn)×min(H, Hn) region may not be coded and/or may be excluded from the scan, as illustrated in FIG. 7(d).

In examples, Wn×Hn may be equal to 32×32 (e.g., which may be the maximum supported size for the non-zero-out area). In examples, there may be smaller non-zero-out areas for transforms (e.g., other than the two-dimensional discrete cosine transforms (DCT-II)). The transform coefficient coding may be affected (e.g., since the syntax elements that specify the transform used may be coded after the levels and/or since the syntax elements may be conditioned on the presence of nonzero levels in certain regions).

In examples, luma blocks with a *max(W, H)* ≤ 32, may be coded in a subblock transform mode. If non-DCT-II transforms are enabled (e.g., on a sequence level), the blocks may be coded using non-DCT-II transforms, and/or the size of the non-zero-out area may be inferred to be equal to 16×16.

The last significant coefficient position may be indicated in video data (e.g., signaled in the bitstream). The explicit coding of zero quantization indexes for coefficients related to high-frequency components may be eliminated by transmitting the position of the last nonzero level in a forward scan order (e.g., which may be the first nonzero level in coding order). Transmitting the position of the last nonzero level may increase coding efficiency and reduce the number of context-coded bins. The x and y coordinates corresponding to the column and row number, respectively, in the matrix of coefficient levels may be indicated independently of each other in video data.

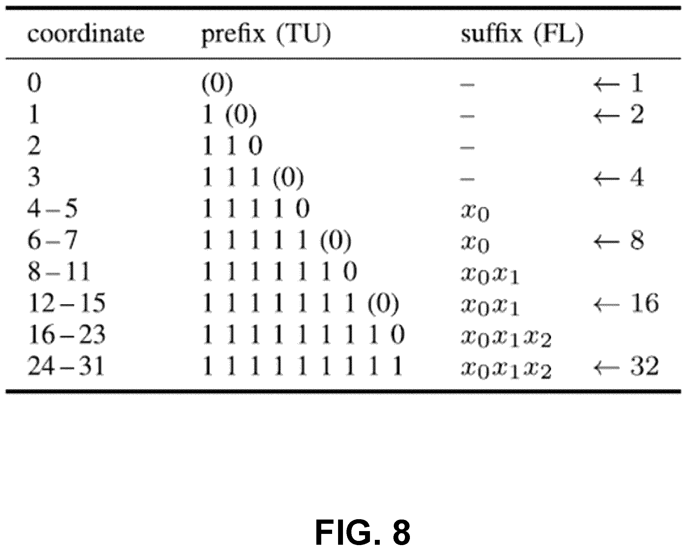

FIG. 8 illustrates an example binarization for coordinates of a last significant coefficient position. As shown in FIG. 8, a component may be represented by a combination of a prefix codeword and/or a (e.g., empty) suffix codeword.

The prefix part may specify an interval of values. The prefix part may be binarized using truncated unary (TU) binarization. The bins may be coded in regular mode. The prefix part indicating the last interval of the non-zero-out region of a TB may be truncated. The zero bins in parenthesis shown in FIG. 8 may not be coded if min(W,Wn ) for the x coordinate, or min(H, Hn) for the y coordinate, are equal to the number in the last table column. The coding of a coordinate (e.g., a position) may be (e.g., completely) skipped if the corresponding block width or height is equal to 1. The suffix part may represent the offset inside the interval indicated by the prefix part. The suffix part may be binarized using fixed length (FL) binarization. The suffix part may be coded in bypass mode. X and y coordinates (e.g., with values greater than 3) may include a suffix part.

At the decoder, the values of the x and y coordinates (e.g., position) of the last significant level may be derived as described herein. $v_{pre}$ may be the number of bins equal to 1 in the prefix codeword. The number $n_{suf}$ of suffix bins to be decoded may be derived by:

$$n_{suf} = \max\left(0, \left\lfloor \frac{v_{pre}}{2} \right\rfloor - 1\right)$$

If/when $v_{suf}$ is the value specified by the suffix codeword (e.g., in binary representation), then the decoded coordinate value *last* may be calculated according to:

$$last = \begin{cases} 2^{n_{suf}} \times \left(2 + (v_{pre} \& 1)\right) + v_{suf}, & n_{suf} > 0 \\ v_{pre} & \text{otherwise} \end{cases}$$

The prefix part for the x coordinate may be signaled followed by the prefix part for the y coordinate. For grouping bypass-coded bins, the suffix parts may be coded after the prefix codewords. The prefix bins of the x and y coordinates may be coded using separate sets of context models.

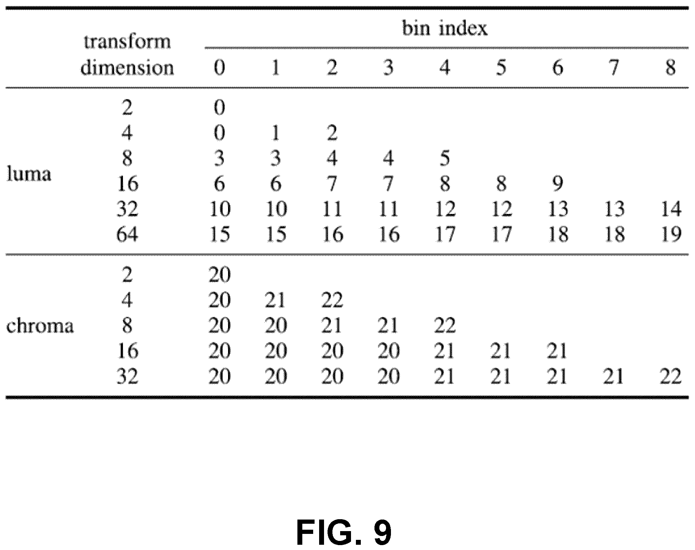

FIG. 9 illustrates an example of CABAC context (e.g., context associated with decoding and/or encoding) indices for prefix bins of last significant coefficient position coding. FIG. 9 lists example CABAC context offsets that indicate the probability model used inside a set. The model chosen may depend on if/whether a luma or chroma block is coded, the width or height of the TB, and/or the bin number inside the prefix codeword. For TBs (e.g., large TBs where zero-out may be present), the transform dimension may be used to derive the context offset. In examples, 46 contexts (e.g., 40 for luma and/or 6 for chroma) may be used for coding the last coefficient position.

The last significant coefficient coordinates may be encoded and/or decoded. The last significant coefficient x- and y-coordinates may respectively encode an index to an interval (e.g., a prefix) and/or an offset within the signaled interval (e.g., a suffix). The prefix and/or suffix may be useful to reconstruct the (e.g., exact) x or y coordinate value. The prefix may be context-based arithmetic coded (e.g., CABAC coded), and/or the suffix may be coded in bypass mode.

The number of intervals may be $N + 1$, where $N = \log_2(T) - 1$, where $T$ may be the transform size. The interval index may be coded via the prefix, through the truncated unary code (e.g., as illustrated by FIG. 12, in case $T = 32$). The suffix may be fixed-length coded over b bits, $b = \max\left(0, \lfloor prefix/2 \rfloor - 1\right)$. The (e.g. maximum) length of the truncated unary code (e.g., the number of context-based coded bins) for a (e.g., one) coordinate may be 3, 5, 7, and/or 9 for transform sizes of 4, 8, 16, and/or 32, respectively.

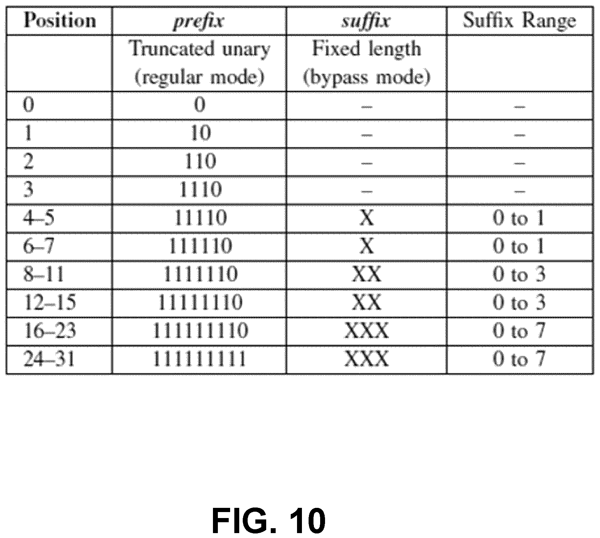

FIG. 10 illustrates an example binarization of the last significant coefficient coordinate syntax elements. Features described herein may be associated with transform coefficient coding. CTU size and maximum transform size (e.g., MTS transform kernels) may be modified (e.g., extended) to 256, where the maximum intra coded block may include a size (e.g., a dimension, criteria, parameter, characteristic, and/or the like) of 128x128. The maximum CTU size may be set to 256 for UHD sequences and/or to 128 (e.g., 128, otherwise). In the (e.g., primary) transformation process, there may (e.g., or may not) be a normative zeroing out operation applied on transform coefficients. If a low frequency non-sparable transform (LFNST) is applied, the primary transform coefficients outside the LFNST region may be normatively zeroed-out.

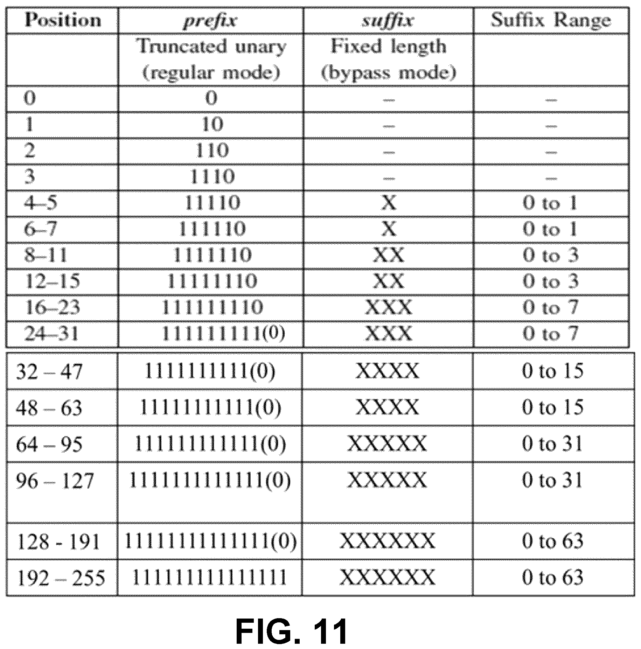

FIG. 11 illustrates an example binarization of a prefix and a suffix of last significant position syntax elements. The binarization of a prefix and/or a suffix part for the entropy coding of a last significant coefficient coordinates may be extended as shown by FIG. 11. The codeword of suffixes may be significantly longer due to the (e.g., large) TBs and/or the removal of zero-out mechanisms for the primary transform stage. A high rate cost may be associated with coding a large value of a last significant coefficient position in an X or Y coordinate.

The syntax element used to signal the X and Y coordinates of the last significant coefficient in a TB may be lastSigPosX and/or lastSigPosY. If/when indicating lastSigPosX or lastSigPosY, lastSigPosX/Y may be used herein (e.g., lastSigPosX/Y may indicate lastSigPosX and/or lastSigPosY).

The following syntax elements may be used to describe the prefix and suffix, respectively of lastSigPosX and/or lastSigPosY elements: last sig coeff x_prefix; last_sig_coeff_x_suffix; last sig coeff y_prefix; and/or last sig coeff y_suffix. The notations may be used in the following, in alternance with notation lastSigPosX, lastSigPosY and/or lastSigPosX/Y.

With respect to the binarization of lastSigPosX and/or lastSigPosY syntax elements, the prefix part may be adapted to the coding of random variables with a statistical distribution, where the occurrence probability of a value decreases (e.g., significantly) as the value increases (e.g., such as a Laplacian distribution).

FIG. 12 illustrates an example distribution of last significant position X values on sequence BQTerrace QP 27. The distribution of last signification X may be far from a Laplacian distribution. In examples, high values of the syntax element may occur more often than others. High values of the syntax element may occur for one or more TB sizes, (e.g., from 32 to 128).

The binarization of the suffix part of the last signification X and Y position coding may be included in a fixed-length-coding (FLC), which may be a unary binary representation of a positive integer value included in a pre-fixed interval. The length of the fixed-length binarization of the suffix may depend on the prefix value. The fixed-length binarized suffix may be coded in bypass mode, e.g., a bin may costs one bit. A fixed-length representation of values may be adapted to coding a uniformly distributed random variables.

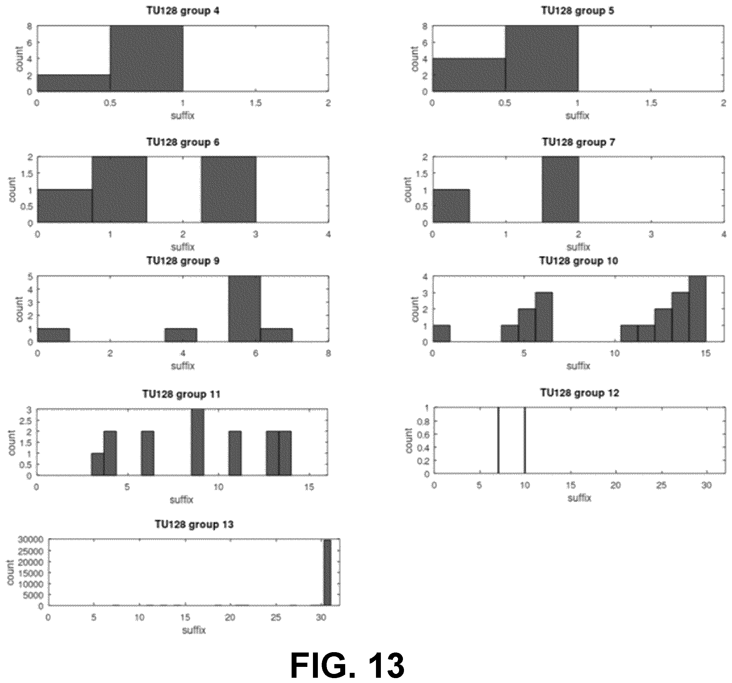

FIG. 13 illustrates an example of a distribution of suffix values for a prefix value (e.g., for TB size 128). FIG. 13 illustrates histograms of a last significant X position suffix value obtained on a video sequence, for a large TB size (e.g., 128) and for an interval of lastSigPosX specified by its prefix. The distribution of a last signification X may be far from a uniform distribution. Values of the syntax element may occur more often than others. A distribution may occur for large TU sizes (e.g., from 32 to 128, especially 64 and 128).

In examples, compression efficiency may be increased. The efficiency of the coding of the last significant transform coefficient position in a TB may be increased if/when coding/decoding the residual block associated with a TB.

Binarization and entropy coding of the last significant coefficient position may be modified to adapt to examples where the statistical behavior of the last significant X and/or Y position value includes a singular behavior.

A TB may include the (e.g., whole) block for which transform coefficients are being signaled or the non-zero-out part of the TB (e.g., in cases where zeroing out of transform coefficients are applied if/when a secondary transform is applied in a considered block).

A secondary prefix indication may be included in video data (e.g., signaled in the bitstream) for block sizes and prefix values. A secondary prefix of the lastSigPosX/Y syntax may indicate that a binarization and/or coding of the lastSigPosX/Y syntax element is employed in the considered TB.

The secondary prefix may be included in an indication (e.g., a flag) indicating that the lastSigPosX/Y value may be (e.g., may take) the maximum value allowed for the considered TB size.

The secondary prefix indication (e.g., a flag) may be context-based arithmetically coded (e.g., CABAC coded).

The secondary prefix indication (e.g., a flag) may be signaled for TB sizes (e.g., 64 and 128, or 32, 64 and 128, and/or the like).

The secondary prefix indication (e.g., a flag) may be signaled before the suffix part of the lastSigPosX/Y syntax element. If the secondary prefix indication (e.g., a flag) indicates that the lastSigPosX/Y value is to be determined based on the TB size, a prefix (e.g., a first prefix) and/or suffix may not be signaled for the considered transform unit. The lastSigPosX/Y value may be determined based on the TB size (e.g., the maximum value allowed for the considered TB size). If the indication (e.g., the secondary prefix indication) indicates that lastSigPosX/Y value is not to be determined based on the TB size, a prefix (e.g., first prefix) and/or a suffix may be signaled for the considered transform unit. The lastSigPosX/Y value may be signaled in video data. Based on the lastSigPosX/Y value being different from a value (e.g., the maximum value) allowed for the considered TB size, the prefix and/or the suffix may be signaled. The lastSigPosX/Y may not be signaled. Not signaling the lastSigPosX/Y may include inferring the least significant bit of the suffix part to 0 and not signaling the least significant bit of the suffix part, (e.g., in the case where a (e.g., other) suffix's bits are set to 1).

The indication (e.g., a flag) may be signaled after the prefix part of the lastSigPosX/Y syntax element. The secondary prefix indication may be associated with a signaled prefix corresponding to the highest allowed value for the considered TB.

If the secondary prefix indication (e.g., a flag) indicates that the lastSigPosX/Y value is to be determined based on the TB size, a prefix and/or suffix may not be signaled for the considered transform unit. If the secondary prefix indication (e.g., a flag) indicates that lastSigPosX/Y value is not to be determined based on the TB size, a suffix may be signaled for the considered transform unit. The lastSigPosX/Y value may be signaled in video data. Based on the lastSigPosX/Y value being different from the maximum value allowed for the considered TB size, the suffix may be signaled. For example, the lastSigPosX/Y may not be signaled. Not signaling the lastSigPosX/Y may include inferring the least significant bit of the suffix part to 1 and/or not signaling the least significant bit. In examples, a low (e.g., lower) cost may be associated with bypassing the transmission of suffix bits.

The proposed secondary prefix for lastSigPosX/Y binarization may be included in an indication that indicates if/whether the considered lastSigPosX/Y value is coded in flipped mode or not. If true, the value (Width-lastSigPosX/Y) may be signaled rather than the value lastSigPosX/Y.

The indication indicating if the considered lastSigPosX/Y value may be coded in flipped mode or not may be coded before the prefix. Separated CABAC context models may be used to code the bins of the prefix, according to if/whether the flip indication is equal to true or false. The indication may be coded after the prefix and/or before the suffix.

The indication may be signaled for (e.g., small) values of the prefix. If the prefix indicates a range of lastSigPosX/Y values that are (e.g., sufficiently) lower than the half of the considered TB size, the proposed flip indication may be signaled. The proposed flip indication may be inferred to be false (e.g., if the prefix does not indicate a range of lastSigPos values that are sufficiently lower than the half of the considered TB size).

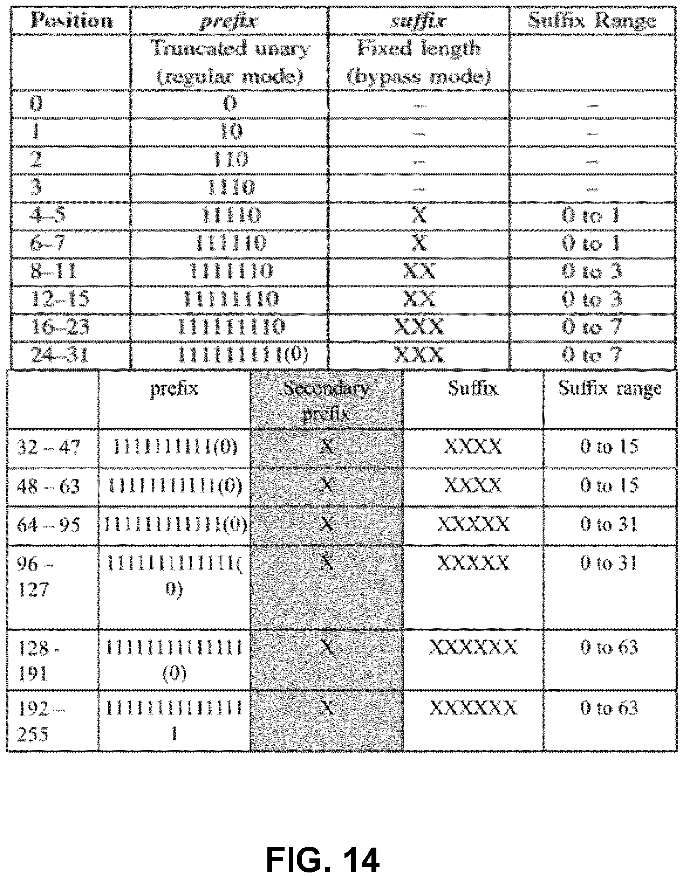

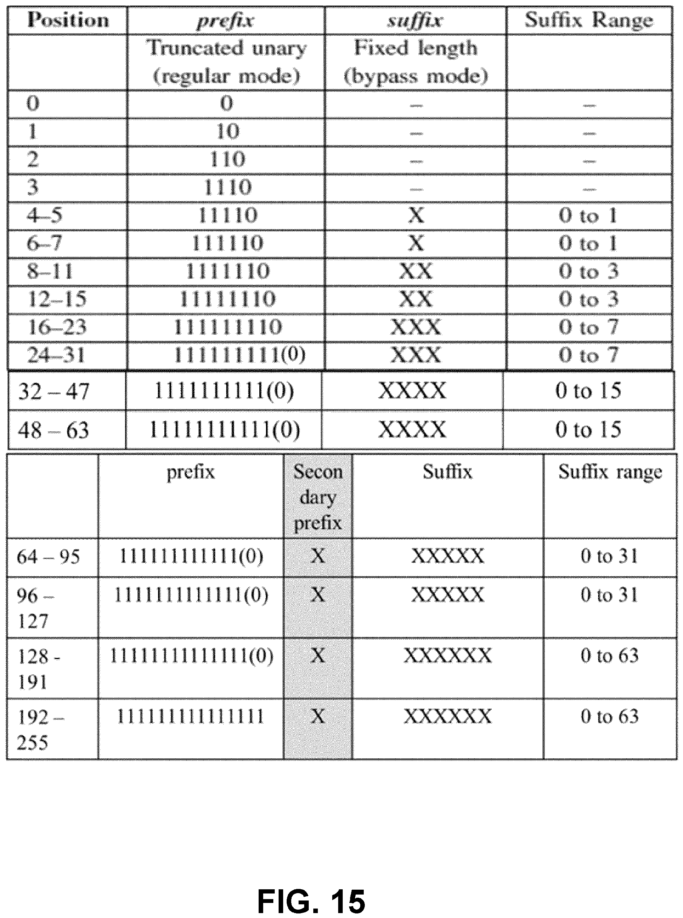

FIG. 14 illustrates an example for a modified binarization of lastSigPosX/Y syntax element. FIG. 15 illustrates an example for a modified binarization of lastSigPosX/Y syntax element. The introduction of a secondary prefix indication as proposed in examples described herein may be illustrated by FIG. 14 and FIG. 15.

The secondary prefix indication may indicate that the lastSigPosX/Y value includes the maximum value allowed in the interval of suffix values associated to the value of signaled prefix. The last significant position value chosen by the encoder may be the highest value of a group, e.g., a range of suffix values associated with a prefix. A statistical distribution may exist (e.g., because the rate cost associated with the suffix may be the same, whatever its value inside a given range). Allowing a transform coefficient of a certain value (e.g., non-zero transform coefficients) in the (e.g., full) range may lead to a decrease in distortion with a zero rate cost increase (e.g., compared to forcing zero coefficients down to a position lower than the maximum value in the considered suffix range). Allowing a transform coefficient of a certain value (e.g., non-zero transform coefficients) may provide the encoder rate distortion optimization examples with a rate-distortion trade-off.

The secondary prefix may be applied to lastSigPosX and/or lastSigPosY (e.g., the secondary prefix may be used for the coding of lastSigPosX and/or lastSigPosY). The statistical behavior of the two variables may be different, and/or their entropy may be modelled differently. The last significant X/Y position (e.g., the change in the last significant X/Y position) may be used for the coding of lastSigPosX/Y.

The entropy coding of lastSigPosX and/or the entropy coding of lastSigPosY may be performed differently from each other. One or more examples as described herein may be applied to the coding of lastSigPosX, and/or may be used for lastSigPosY.

The usage of entropy coding of lastSigPosX and/or lastSigPosY for a picture may be signaled by means of high level signaling (e.g., in the picture header, slice header, tile header, tile group header, slice group header, picture parameter set, adaptive parameter set, sequence parameter set, and/or the like).

In one or more examples herein, a device for video decoding may determine a range of values for a position (e.g., a coordinate) associated with a coefficient of a certain value (e.g., a non-zero coefficient) of a video block (e.g., a TB). The coordinate may indicate a sample location associated with the non-zero coefficient in the video block. The device may determine, based on a size of the video block, an entropy coding context (e.g., CABAC context) for entropy decoding an indication and/or a syntax element (e.g., coordinate indication). The coordinate indication may be a first coordinate indication and may indicate whether a second coordinate indication (e.g., a coordinate suffix) may be received. The second coordinate indication may be associated with the range of values. The device may determine the coordinate based on the coordinate indication. The device may decode the video block based on the coordinate associated with the non-zero coefficient.

In examples, the CABAC context used to code (e.g., encode and/or decode) the coordinate indication (e.g., the secondary prefix indication such as the secondary prefix flag) may be determined according to the component in which the current TB is included in. A (e.g., separate) CABAC context may be used for (e.g., each of) the Y, Cb and/or Cr component. A device may, on a condition that the component type associated with the TB is a luma component, determine a first CABAC context (e.g., a first CABAC context is determined). The device may, on a condition that the component type associated with the TB is a chroma component, determine a second CABAC context (e.g., a second CABAC context is determined).

In examples the CABAC context used to code the secondary prefix indication (e.g., the secondary prefix flag) may be determined according to the considered TB size (e.g., TB width and/or height). In examples, a (e.g., separate) CABAC context may be used for a (e.g., each of) TB size in width and height. A device may, on a condition that the TB is a first size, determine a first CABAC context (e.g., a first CABAC context is determined), and/or, on a condition that the TB is a second size, determine a second CABAC context (e.g., a second CABAC context is determined). The first size and/or the second size may be different. The first CABAC context and/or the second CABAC context may be different.

The CABAC context used to code the coordinate indication may be determined based on a TB width. In examples, for the coding of the secondary prefix indication (e.g., a flag) associated to the significant X position, a (e.g., separate) context may be used depending on of the TB width.

The CABAC context used to code the coordinate indication may be determined based on a TB height. In examples, for the coding of the secondary prefix indication (e.g., a flag) associated with the last significant Y position, a (e.g., separate) context may be used depending on of the TB height.

In examples, a (e.g., separate) context may be used for a (e.g., each) TB size (e.g., width or height, respectively for the coding of the last X and Y position secondary prefix indication) for which the secondary prefix is signaled.

In examples, a first context (e.g., separate context) may be used for TB sizes higher than a threshold (e.g., a certain threshold).

In examples, a second context (e.g., separate context) may be used for TB sizes lower than a threshold (e.g., a certain threshold). In examples, the first context and the second context may be different.

Context modeling for suffix bins coding may be described herein. To avoid the risk that the rate cost of bypass-coded suffix part of the lastSigPosX/Y syntax element may be binarized with the fixed length binarization, its bins may be context-based coded with context models.

A (e.g., each) bit of the binarized suffix value (e.g., a bin), may be CABAC encoded using a (e.g., a separate) context. Contexts may be different per component type, and/or per LUMA and/or Chroma coefficients. Contexts may be different per TU size and/or suffix range size. Contexts may be different per prefix value, which may identify which range of a last position value is being signaled. A bin may be CABAC encoded using a context model that is dependent of the history of precedent bins. A first bin of the suffix value may use a (e.g., a single) CABAC context. A second bin may use a (e.g., one) CABAC context chosen (e.g., determined) among multiple (e.g., two possible) contexts. The choice (e.g., determination) may be made according to the value of a preceding bin. A third bin may use a CABAC context chosen (e.g., determined) among multiple (e.g., four) contexts, based on the values provided by (e.g., taken on) the two preceding bins. An nth bin may use a CABAC context among $2^{n-1}$ context based on values provided by (e.g., taken by) preceding bins in the codeword. The context index may be equal to the integer corresponding to a unary representation of first n-1 bins:

$$context_{id} = \sum_{i=0}^{n-1} bin(i).\,2^i$$

Rate cost of bins having a low entropy may be reduced. The cost of bins may be the same value (e.g., of the TU size 128 in FIG. 14). Compared to a CABAC coding of a bin with a (e.g., single) context (e.g., given the fixed-length binarization process), the semantic of a suffix's bin may be different for one or more (e.g., different) values of preceding bins. Using a context for a bin (e.g., a single context for each bin) may make the CABAC coding mixing different types of information in the same bin.

One or more examples as described herein may be combined. In examples, the secondary prefix indication (e.g., a flag) may indicate the presence of the suffix part. In the coding of the suffix, a bin (e.g., some bins such as a first bin) may be context-based arithmetic coded (e.g., CABAC coded).

In examples, a bin (e.g., the most significant bin) of the fixed length unary binary representation of the suffix may be CABAC coded.

In examples, the CABAC context used to code a bin (e.g., the most significant bin) of the suffix part may be determined based on a component in which the considered TB is included. For example, a context may be used for a component (e.g., a separate context may be used for each component).

In examples, the CABAC context used to code the most significant bin (MSB) of the suffix part may be determined based on the size (e.g., dimension, criteria, characteristic, parameter, and/or the like) of the considered TB. For example, a context (e.g., a separate context) may be used for a (e.g., each) TB size.

In examples, a context (e.g., a separate context) for coding and/or decoding the MSB of the suffix may be used for block sizes higher than or equal to a block size (e.g., a certain block size). For example, from TB size 16, a context may be used to code the MSB of the suffix for a block size (e.g., a separate context may be used to code the MSB of the suffix for each block size). In examples, for TB sizes lower than 16, the same context may be used as for TB size 16. In examples, for TB sizes lower than the TB size threshold (e.g., 16 in one example), the MSB of the suffix may undergo equi-probable (EP) coding (e.g., the MSB may not be CABAC coded).

Features described herein may be associated with a modified suffix binarization and/or context-based coding of suffix bins. The binarization of the suffix part of syntax element lastSigPosX/Y may be performed as described herein.

The suffix coding may follow a binary tree coding to specify, in which sub-range of a suffix range, the input suffix value to signal is located. If/when a sub-range of size lower or equal to a (e.g., pre-defined) threshold value is reached, a fixed-length coding of the remaining value may be coded. In examples, a minimum sub-range length may be 1 (e.g., no fixed-length remaining value may be needed).

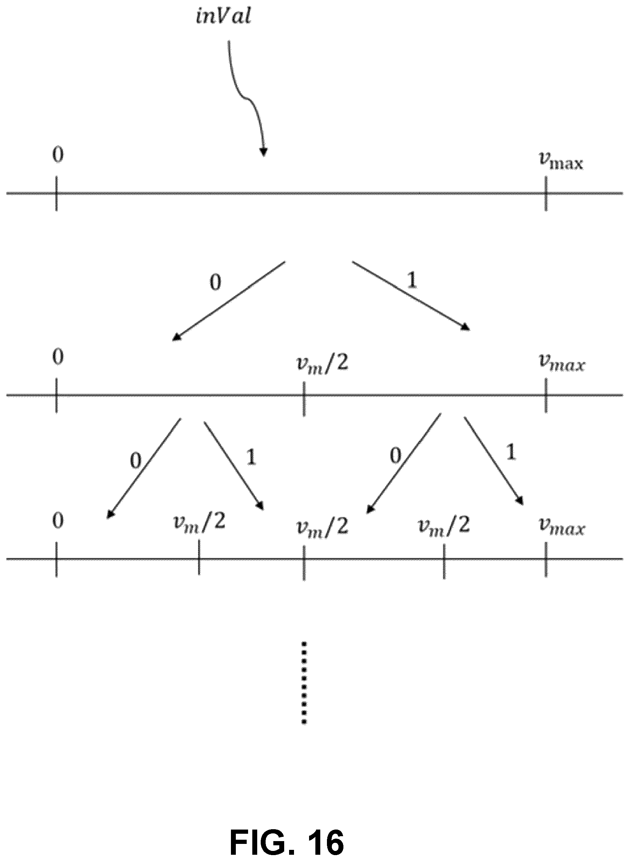

FIG. 16 illustrates an example diagram of CABAC-based dyadic signaling of a suffix value down to a pre-fixed reduced interval. The example may be illustrated by FIG. 16. An input value may be inVal, the (e.g., whole) suffix range length may be rangeLength, and/or the minimum sub-range length may be subRangeLength.

```
maxVal=rangeLength-1
curRange=rangeLength
while( currRange > subRangeLength ) {
 th = ( currentRange >> 1 );
 bin = ( inval > th ) ? 1: 0;
 range = th;
 inVal = bin ? ( inVal - th) : (th - inVal);
}
remainingBits=log2(subRangeLength);
Fixed-Length-Coding(inVal, remainingBits);
```

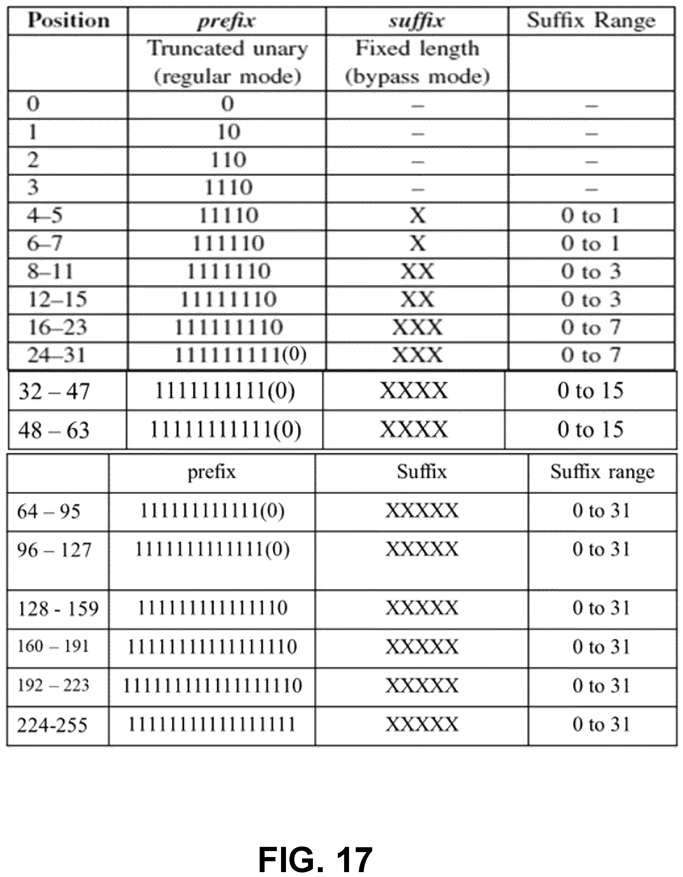

A modified prefix specification may target ranges (e.g., finer ranges) of suffix values. The binarization operations of the lastSigPosX/Y may be performed as described herein. The suffix interval range indicated by the prefix may be reduced for a larger value of the last significant positions values (e.g., to enable the suffix part to involve a reduced number of bypass coded bins). Examples of a reduced suffix interval range may be provided in any one of FIGS. 17-19. FIGS. 17-19 show examples where the interval of last significant position values addressed by a (e.g., each) suffix may be reduced.

FIG. 17, illustrates an example of reducing a suffix range for a TU size (e.g., 256). In FIG. 17, suffix ranges for last position values between 128 and 255 may be reduced. In examples, reducing the suffix range may be associated with TBs with a size of 256. In examples, the rate cost of the concerned suffix for such TB sizes may be reduced.

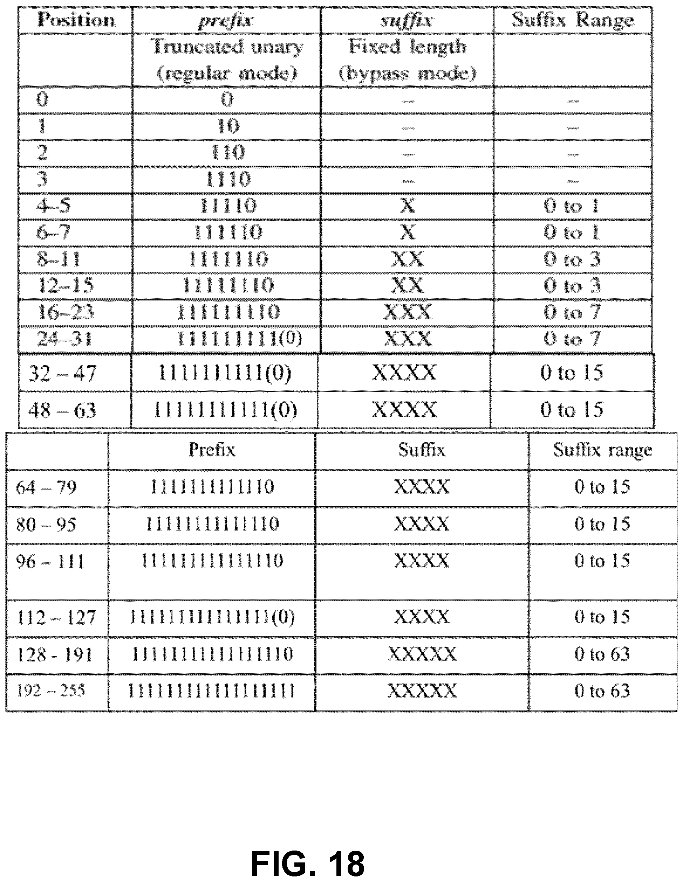

FIG. 18 illustrates reducing suffix range for a suffix range or 64-127, which may concern TU sizes 64 and 128. On FIG. 18, suffix ranges for last position values between 64 and 127 may be reduced. In examples, reducing the suffix ranges may be associated with TBs with a size of 128 and/or TBs with a size of 256 in width or height. In examples, the rate cost of the concerned suffix for such TB sizes may be reduced.

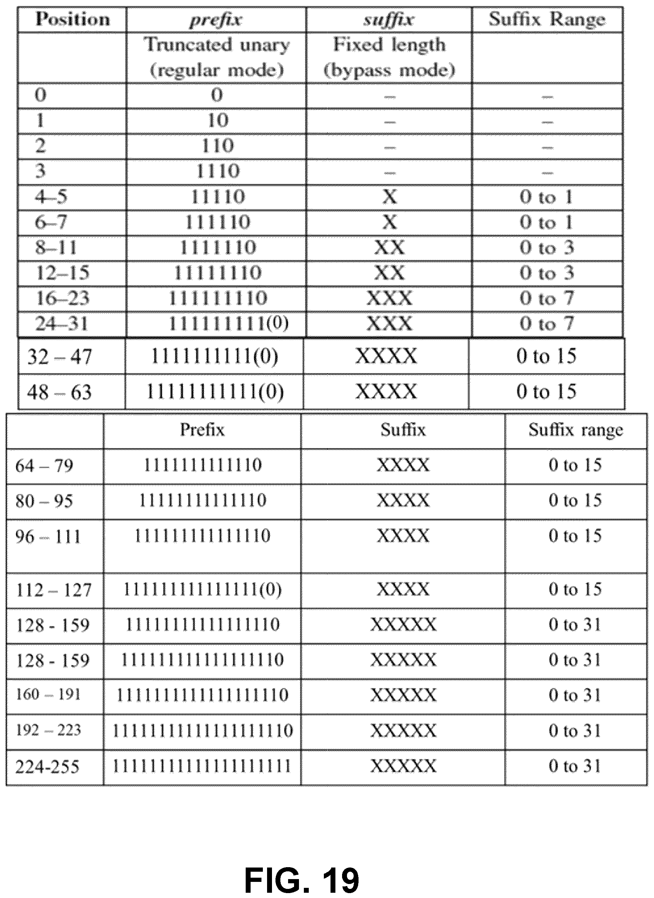

FIG. 19 illustrates an example for reducing the suffix range for a last significant position value between 64 and 255. In FIG. 19, the binarization may be changed such that suffix ranges for last position values between 64 and 255 are reduced. In examples, reducing the suffix ranges may be associated with TBs with a size of 128 and/or TBs with a size of 256 in width and/or height. In examples, the rate cost of the concerned suffix for such TB sizes may be reduced.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGS. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored.

Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

session description protocol (SDP), for example as described in RFCs and/or used in conjunction with real-time transport protocol (RTP) transmission.

hypertext transfer protocol (HTTP) live Streaming (HLS) manifest transmitted over HTTP.

dynamic adaptive streaming over HTTP (DASH) media presentation description (MPD) descriptors, for example as used in DASH and transmitted over HTTP.

RTP header extensions, for example as used during RTP streaming.

International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A device for video decoding, comprising:
   a processor configured to:

   determine a range of values for a coordinate associated with a non-zero coefficient of a transform block (TB), wherein the coordinate indicates a sample location associated with the non-zero coefficient in the TB;
   determine, based on a size of the TB, a context-adaptive binary arithmetic coding (CABAC) context for entropy decoding a coordinate indication indicating whether a coordinate suffix associated with the range of values is to be received;
   determine the coordinate based on the coordinate indication; and
   decode the TB based on the coordinate associated with the non-zero coefficient.

2. The device of claim 1, wherein the processor is further configured to:

   entropy decode the coordinate indication associated with the coordinate based on the CABAC context; and determine, based on the coordinate indication, that the coordinate suffix is not to be received and that the coordinate is to be determined based on a subset of the range values and the size of the TB.

3. The device of claim 2, wherein the processor is further configured to determine that the coordinate is a maximum value that is allowed according to the size of the TB.

4. The device of claim 1, wherein the processor is further configured to:

   entropy decode the coordinate indication associated with the coordinate based on the CABAC context; determine, based on the coordinate indication, that the coordinate suffix is to be received; receive the coordinate suffix, wherein the coordinate suffix indicates a value within the range of values or an offset associated with the range of values; and determine the coordinate based on the range of values and the coordinate suffix.

5. A device for video encoding, comprising:
   a processor configured to:

   determine a range of values for a coordinate associated with a non-zero coefficient of a transform block (TB), wherein the coordinate indicates a sample location associated with the non-zero coefficient in the TB; encode the TB based on the coordinate associated with the non-zero coefficient; obtain a coordinate indication indicating whether a coordinate suffix associated with the range of values is to be sent; determine, based on a size of the TB, a context-adaptive binary arithmetic coding (CABAC) context for entropy encoding the coordinate indication; and entropy encode the coordinate indication based on the CABAC context.

6. The device of claim 5, wherein a value of the coordinate indication indicates that the coordinate suffix is not to be sent and that the coordinate is to be determined based on a subset of the range values and the size of the TB.

7. The device of claim 5, wherein the coordinate indication indicates that the coordinate is a maximum value that is allowed according to the size of the TB.

8. The device of claim 5, wherein a value of the coordinate indication indicates that the coordinate suffix is to be sent, and the processor is further configured to send the coordinate suffix, wherein the coordinate suffix indicates a value within the range of values, or an offset associated with the range of values.

9. The device of any one of claims 1-8, wherein the range of values is determined based on a first coordinate prefix, the coordinate indication is a second coordinate prefix, the non-zero coefficient is a last significant coefficient of the TB, and, wherein, on a condition that the TB is a first size, a first CABAC context is determined, and, on a condition that the TB is a second size, a second CABAC context is determined, wherein the first size and the second size are different, and wherein the first CABAC context and the second CABAC context are different.

10. The device of any one of claims 1-8, wherein the CABAC context is further determined based on a component type associated with the TB, and wherein, on a condition that the component type associated with the TB is a luma component, a first CABAC context is determined, and, on a condition that the component type associated with the TB is a chroma component, a second CABAC context is determined.

11. A video decoding method comprising:

    determining a range of values for a coordinate associated with a non-zero coefficient of a transform block (TB), wherein the coordinate indicates a sample location associated with the non-zero coefficient in the TB; determining, based on a size of the TB, a context-adaptive binary arithmetic coding (CABAC) context for entropy decoding a coordinate indication indicating whether a coordinate suffix associated with the range of values is to be received; determining the coordinate based on the coordinate indication; and

decoding the TB based on the coordinate associated with the non-zero coefficient.

12. The video decoding method of claim 11, wherein the method further comprises:

entropy decoding the coordinate indication associated with the coordinate based on the CABAC context; and determining, based on the coordinate indication, that the coordinate suffix is not to be received and that the coordinate is to be determined based on a subset of the range values and the size of the TB.

13. The video decoding method of claim 11, wherein the method further comprises:

entropy decoding the coordinate indication associated with the coordinate based on the CABAC context;
determining, based on the coordinate indication, that the coordinate suffix is to be received;
receiving the coordinate suffix, wherein the coordinate suffix indicates a value within the range of values or an offset associated with the range of values; and
determining the coordinate based on the range of values and the coordinate suffix.

14. A video encoding method comprising:

determining a range of values for a coordinate associated with a non-zero coefficient of a transform block (TB), wherein the coordinate indicates a sample location associated with the non-zero coefficient in the TB;
encoding the TB based on the coordinate associated with the non-zero coefficient;
obtaining a coordinate indication indicating whether a coordinate suffix associated with the range of values is to be sent;
determining, based on a size of the TB, a context-adaptive binary arithmetic coding (CABAC) context for entropy encoding the coordinate indication; and
entropy encoding the coordinate indication based on the CABAC context.

15. The video encoding method of claim 14, wherein a value of the coordinate indication indicates that the coordinate suffix is not to be sent and that the coordinate is to be determined based on a subset of the range values and the size of the TB.

**FIG. 1**

FIG. 2

EP 4 765 809 A1

**FIG. 3**

EP 4 765 809 A1

Bin values for context model update

Context modeler

Regular Decoding Engine

Bin

Bitstream

Bypass Decoding Engine

Bin

Binary arithmetic decoder

Bin String

Binary Codeword to Syntax Element

Syntax element

EP 4 765 809 A1

## FIG. 4

FIG. 5

| height $H$ | width $W$ | | | | | | |
|---|---|---|---|---|---|---|---|
| | 1 | 2 | 4 | 8 | 16 | 32 | 64 |
| 1 | – | – | – | – | $16\times1$ | $16\times1$ | $16\times1$ |
| 2 | – | $2\times2$ | $2\times2$ | $8\times2$ | $8\times2$ | $8\times2$ | $8\times2$ |
| 4 | – | $2\times2$ | $4\times4$ | $4\times4$ | $4\times4$ | $4\times4$ | $4\times4$ |
| 8 | – | $2\times8$ | $4\times4$ | $4\times4$ | $4\times4$ | $4\times4$ | $4\times4$ |
| 16 | $1\times16$ | $2\times8$ | $4\times4$ | $4\times4$ | $4\times4$ | $4\times4$ | $4\times4$ |
| 32 | $1\times16$ | $2\times8$ | $4\times4$ | $4\times4$ | $4\times4$ | $4\times4$ | $4\times4$ |
| 64 | $1\times16$ | $2\times8$ | $4\times4$ | $4\times4$ | $4\times4$ | $4\times4$ | $4\times4$ |

# FIG. 6

FIG. 7

(a) (b) (c) (d)

zero-out region

| coordinate | prefix (TU) | suffix (FL) | |
|---|---|---|---|
| 0 | (0) | $-$ | $\leftarrow 1$ |
| 1 | 1 (0) | $-$ | $\leftarrow 2$ |
| 2 | 1 1 0 | $-$ | |
| 3 | 1 1 1 (0) | $-$ | $\leftarrow 4$ |
| 4 – 5 | 1 1 1 1 0 | $x_0$ | |
| 6 – 7 | 1 1 1 1 1 (0) | $x_0$ | $\leftarrow 8$ |
| 8 – 11 | 1 1 1 1 1 1 0 | $x_0 x_1$ | |
| 12 – 15 | 1 1 1 1 1 1 1 (0) | $x_0 x_1$ | $\leftarrow 16$ |
| 16 – 23 | 1 1 1 1 1 1 1 1 0 | $x_0 x_1 x_2$ | |
| 24 – 31 | 1 1 1 1 1 1 1 1 1 | $x_0 x_1 x_2$ | $\leftarrow 32$ |

## FIG. 8

EP 4 765 809 A1

| | transform dimension | bin index | | | | | | | | |
|---|---|---|---|---|---|---|---|---|---|---|
| | | 0 | 1 | 2 | 3 | 4 | 5 | 6 | 7 | 8 |
| luma | 2 | 0 | | | | | | | | |
| | 4 | 0 | 1 | 2 | | | | | | |
| | 8 | 3 | 3 | 4 | 4 | 5 | | | | |
| | 16 | 6 | 6 | 7 | 7 | 8 | 8 | 9 | | |
| | 32 | 10 | 10 | 11 | 11 | 12 | 12 | 13 | 13 | 14 |
| | 64 | 15 | 15 | 16 | 16 | 17 | 17 | 18 | 18 | 19 |
| chroma | 2 | 20 | | | | | | | | |
| | 4 | 20 | 21 | 22 | | | | | | |
| | 8 | 20 | 20 | 21 | 21 | 22 | | | | |
| | 16 | 20 | 20 | 20 | 20 | 21 | 21 | 21 | | |
| | 32 | 20 | 20 | 20 | 20 | 21 | 21 | 21 | 21 | 22 |

# FIG. 9

EP 4 765 809 A1

EP 4 765 809 A1

| Position | prefix | suffix | Suffix Range |
|---|---|---|---|
| | Truncated unary (regular mode) | Fixed length (bypass mode) | |
| 0 | 0 | – | – |
| 1 | 10 | – | – |
| 2 | 110 | – | – |
| 3 | 1110 | – | – |
| 4–5 | 11110 | X | 0 to 1 |
| 6–7 | 111110 | X | 0 to 1 |
| 8–11 | 1111110 | XX | 0 to 3 |
| 12–15 | 11111110 | XX | 0 to 3 |
| 16–23 | 111111110 | XXX | 0 to 7 |
| 24–31 | 111111111 | XXX | 0 to 7 |

# FIG. 10

| Position | prefix | suffix | Suffix Range |
|---|---|---|---|
| | Truncated unary (regular mode) | Fixed length (bypass mode) | |
| 0 | 0 | – | – |
| 1 | 10 | – | – |
| 2 | 110 | – | – |
| 3 | 1110 | – | – |
| 4–5 | 11110 | X | 0 to 1 |
| 6–7 | 111110 | X | 0 to 1 |
| 8–11 | 1111110 | XX | 0 to 3 |
| 12–15 | 11111110 | XX | 0 to 3 |
| 16–23 | 111111110 | XXX | 0 to 7 |
| 24–31 | 111111111(0) | XXX | 0 to 7 |
| 32 – 47 | 11111111111(0) | XXXX | 0 to 15 |
| 48 – 63 | 111111111111(0) | XXXX | 0 to 15 |
| 64 – 95 | 11111111111111(0) | XXXXX | 0 to 31 |
| 96 – 127 | 1111111111111111(0) | XXXXX | 0 to 31 |
| 128 - 191 | 11111111111111111(0) | XXXXXX | 0 to 63 |
| 192 – 255 | 1111111111111111 | XXXXXX | 0 to 63 |

**FIG. 11**

FIG. 12

EP 4 765 809 A1

FIG. 13

| Position | prefix | suffix | Suffix Range |
|---|---|---|---|
| | Truncated unary (regular mode) | Fixed length (bypass mode) | |
| 0 | 0 | — | — |
| 1 | 10 | — | — |
| 2 | 110 | — | — |
| 3 | 1110 | — | — |
| 4–5 | 11110 | X | 0 to 1 |
| 6–7 | 111110 | X | 0 to 1 |
| 8–11 | 1111110 | XX | 0 to 3 |
| 12–15 | 11111110 | XX | 0 to 3 |
| 16–23 | 111111110 | XXX | 0 to 7 |
| 24–31 | 111111111(0) | XXX | 0 to 7 |

| | prefix | Secondary prefix | Suffix | Suffix range |
|---|---|---|---|---|
| 32 – 47 | 1111111111(0) | X | XXXX | 0 to 15 |
| 48 – 63 | 11111111111(0) | X | XXXX | 0 to 15 |
| 64 – 95 | 1111111111111(0) | X | XXXXX | 0 to 31 |
| 96 – 127 | 1111111111111(0) | X | XXXXX | 0 to 31 |
| 128 – 191 | 111111111111111(0) | X | XXXXXX | 0 to 63 |
| 192 – 255 | 1111111111111111 | X | XXXXXX | 0 to 63 |

# FIG. 14

| Position | prefix | suffix | Suffix Range |
|---|---|---|---|
| | Truncated unary (regular mode) | Fixed length (bypass mode) | |
| 0 | 0 | — | — |
| 1 | 10 | — | — |
| 2 | 110 | — | — |
| 3 | 1110 | — | — |
| 4–5 | 11110 | X | 0 to 1 |
| 6–7 | 111110 | X | 0 to 1 |
| 8–11 | 1111110 | XX | 0 to 3 |
| 12–15 | 11111110 | XX | 0 to 3 |
| 16–23 | 111111110 | XXX | 0 to 7 |
| 24–31 | 111111111(0) | XXX | 0 to 7 |
| 32 – 47 | 1111111111(0) | XXXX | 0 to 15 |
| 48 – 63 | 11111111111(0) | XXXX | 0 to 15 |

| | prefix | Secondary prefix | Suffix | Suffix range |
|---|---|---|---|---|
| 64 – 95 | 111111111111(0) | X | XXXXX | 0 to 31 |
| 96 – 127 | 1111111111111(0) | X | XXXXX | 0 to 31 |
| 128 - 191 | 11111111111111(0) | X | XXXXXX | 0 to 63 |
| 192 – 255 | 111111111111111 | X | XXXXXX | 0 to 63 |

# FIG. 15

**FIG. 16**

| Position | prefix | suffix | Suffix Range |
|---|---|---|---|
| | Truncated unary (regular mode) | Fixed length (bypass mode) | |
| 0 | 0 | — | — |
| 1 | 10 | — | — |
| 2 | 110 | — | — |
| 3 | 1110 | — | — |
| 4–5 | 11110 | X | 0 to 1 |
| 6–7 | 111110 | X | 0 to 1 |
| 8–11 | 1111110 | XX | 0 to 3 |
| 12–15 | 11111110 | XX | 0 to 3 |
| 16–23 | 111111110 | XXX | 0 to 7 |
| 24–31 | 111111111(0) | XXX | 0 to 7 |
| 32 – 47 | 1111111111(0) | XXXX | 0 to 15 |
| 48 – 63 | 11111111111(0) | XXXX | 0 to 15 |

| | prefix | Suffix | Suffix range |
|---|---|---|---|
| 64 – 95 | 111111111111(0) | XXXXX | 0 to 31 |
| 96 – 127 | 1111111111111(0) | XXXXX | 0 to 31 |
| 128 - 159 | 11111111111110 | XXXXX | 0 to 31 |
| 160 – 191 | 111111111111110 | XXXXX | 0 to 31 |
| 192 – 223 | 1111111111111110 | XXXXX | 0 to 31 |
| 224-255 | 1111111111111111 | XXXXX | 0 to 31 |

# FIG. 17

| Position | *prefix* | *suffix* | Suffix Range |
|---|---|---|---|
|  | Truncated unary (regular mode) | Fixed length (bypass mode) |  |
| 0 | 0 | — | — |
| 1 | 10 | — | — |
| 2 | 110 | — | — |
| 3 | 1110 | — | — |
| 4–5 | 11110 | X | 0 to 1 |
| 6–7 | 111110 | X | 0 to 1 |
| 8–11 | 1111110 | XX | 0 to 3 |
| 12–15 | 11111110 | XX | 0 to 3 |
| 16–23 | 111111110 | XXX | 0 to 7 |
| 24–31 | 111111111(0) | XXX | 0 to 7 |
| 32 – 47 | 1111111111(0) | XXXX | 0 to 15 |
| 48 – 63 | 11111111111(0) | XXXX | 0 to 15 |
|  | Prefix | Suffix | Suffix range |
| 64 – 79 | 1111111111110 | XXXX | 0 to 15 |
| 80 – 95 | 11111111111110 | XXXX | 0 to 15 |
| 96 – 111 | 111111111111110 | XXXX | 0 to 15 |
| 112 – 127 | 11111111111111111(0) | XXXX | 0 to 15 |
| 128 - 191 | 111111111111111110 | XXXXX | 0 to 63 |
| 192 – 255 | 111111111111111111 | XXXXX | 0 to 63 |

# FIG. 18

| Position | *prefix* Truncated unary (regular mode) | *suffix* Fixed length (bypass mode) | Suffix Range |
|---|---|---|---|
| 0 | 0 | — | — |
| 1 | 10 | — | — |
| 2 | 110 | — | — |
| 3 | 1110 | — | — |
| 4–5 | 11110 | X | 0 to 1 |
| 6–7 | 111110 | X | 0 to 1 |
| 8–11 | 1111110 | XX | 0 to 3 |
| 12–15 | 11111110 | XX | 0 to 3 |
| 16–23 | 111111110 | XXX | 0 to 7 |
| 24–31 | 111111111(0) | XXX | 0 to 7 |
| 32 – 47 | 1111111111(0) | XXXX | 0 to 15 |
| 48 – 63 | 11111111111(0) | XXXX | 0 to 15 |

| | Prefix | Suffix | Suffix range |
|---|---|---|---|
| 64 – 79 | 1111111111110 | XXXX | 0 to 15 |
| 80 – 95 | 11111111111110 | XXXX | 0 to 15 |
| 96 – 111 | 111111111111110 | XXXX | 0 to 15 |
| 112 – 127 | 1111111111111111(0) | XXXX | 0 to 15 |
| 128 - 159 | 11111111111111110 | XXXXX | 0 to 31 |
| 128 - 159 | 111111111111111110 | XXXXX | 0 to 31 |
| 160 – 191 | 1111111111111111110 | XXXXX | 0 to 31 |
| 192 – 223 | 11111111111111111110 | XXXXX | 0 to 31 |
| 224-255 | 11111111111111111111 | XXXXX | 0 to 31 |

# FIG. 19

Europäisches
Patentamt

European
Patent Office

Office européen
des brevets

## EUROPEAN SEARCH REPORT

**Application Number**

EP 24 30 7152

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/322640 A1 (RUSANOVSKYY DMYTRO [US] ET AL) 8 October 2020 (2020-10-08) * paragraphs [0108] - [0126], [0146] - [0150] * | 1-15 | INV. H04N19/13 H04N19/18 H04N19/70 |
| Y | WO 2024/208586 A1 (KONINKLIJKE PHILIPS NV [NL]) 10 October 2024 (2024-10-10) * page 53, l. 27 - page 55, l. 8 * | 1-15 | |
| A | US 2024/129512 A1 (WANG FAN [CN]) 18 April 2024 (2024-04-18) * paragraphs [0092] - [0110], [0225] - [0264] * | 1-15 | |

| | |
|---|---|
| | TECHNICAL FIELDS SEARCHED (IPC) |
| | H04N |

The present search report has been drawn up for all claims

| Place of search | Date of completion of the search | Examiner |
|---|---|---|
| Munich | 5 May 2025 | Hindelang, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 7152

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2025

| Patent document cited in search report | Publication date | Patent family member(s) | Publication date |
|---|---|---|---|
| US 2020322640 A1 | 08-10-2020 | BR 112021018797 A2 | 23-11-2021 |
| | | CN 113647107 A | 12-11-2021 |
| | | EP 3949406 A1 | 09-02-2022 |
| | | JP 7265032 B2 | 25-04-2023 |
| | | JP 2022524213 A | 28-04-2022 |
| | | KR 20210141524 A | 23-11-2021 |
| | | SG 11202109468R A | 28-10-2021 |
| | | TW 202046725 A | 16-12-2020 |
| | | US 2020322640 A1 | 08-10-2020 |
| | | WO 2020205954 A1 | 08-10-2020 |
| WO 2024208586 A1 | 10-10-2024 | NONE | |
| US 2024129512 A1 | 18-04-2024 | CN 117561710 A | 13-02-2024 |
| | | EP 4366303 A1 | 08-05-2024 |
| | | US 2024129512 A1 | 18-04-2024 |
| | | WO 2023272533 A1 | 05-01-2023 |

EPO FORM P0459

For more details about this annex : see Official Journal of the European Patent Office, No. 12/82